# EUROPEAN PATENT SPECIFICATION

(11) **EP 4 195 393 B1**
(45) Date of publication and mention of the grant of the patent: **23.10.2024**
(21) Application number: 21765962.2
(22) Date of filing: 06.08.2021
(51) Int. Cl.: H01M 50/35, H01M 10/12, H01M 4/14

(54) **SYSTEM FOR ELECTRIC BATTERY AND STRUCTURE FOR ELECTRIC BATTERY**
ELEKTRODE FÜR EINE ELEKTRISCHE BATTERIE UND STRUKTUR FÜR ELEKTRODEN ODER ZUGEHÖRIGE BATTERIE
ÉLECTRODE POUR BATTERIE ÉLECTRIQUE, ET STRUCTURE POUR DES ÉLECTRODES OU BATTERIE ASSOCIÉE

(30) Priority: 07.08.2020 ES 202030848
(43) Date of publication of application: 14.06.2023
(73) Proprietor: HIDROGENAVAR, S.L., 31192 Mutilva (Navarra) (ES)
(72) Inventor: OCHOA GUTIÉRREZ, Pedro, 31191 Cordovilla (Navarra) (ES)
(74) Representative: Herrero & Asociados, S.L.
(86) International application number: PCT/ES2021/070599
(87) International publication number: WO 2022/029359

(56) References cited:
- EP-A1- 2 293 364
- JP-A- 2005 019 084
- JP-A- 2016 152 192

## Description

### OBJECT OF THE INVENTION

The present invention relates to a system comprising an electrode for an electric battery, of the traditional lead-acid type, which, based on the conventional structuring of said type of batteries, has the novelty of including means for the use of hydrogen produced during its operation.

According to another object of the invention, a structure for electrodes is described, for application in "lead-acid" electric batteries, said structure can be coupled to the electrode described herein, or coupled to other existing electrodes, or coupled to a battery or set of batteries.

The invention is defined in the appended claims.

### BACKGROUND OF THE INVENTION

As it is known, in traditional batteries, during the battery charging process, oxygen is produced at the anode at the same time as hydrogen is produced at the cathode, known as the hydrolysis process. Similarly, when the battery is discharged, other gases that can be used are produced.

However, these gases are not used during the lifetime of the battery.

The reality is that hydrogen produced by hydrolysis falls into the category of "green hydrogen" that is currently being highly valued by the European Union, with strong investment lines for its production as a non-polluting fuel alternative to current fuels.

JP 2005 019084 A describes a structure applied on a cylindrical lead-acid battery comprising an electrode assembly and an electrolyte; the structure comprising a tilted cover with a chimney through which the gases produced during the electrolysis are evacuated.

### DESCRIPTION OF THE INVENTION

The recommended system solves in a fully satisfactory way the problems previously set forth, making it possible to take advantage of the hydrogen generated both during its charging and its discharge throughout its lifetime, occurring the same thing with oxygen.

For this purpose, and more specifically, starting from the conventional structuring of a lead-acid type battery, in which its internal structure is divided into a series of cells in each of which at least two electrodes participate, it has been envisaged that in correspondence with the upper area of each electrode a tilted lid or roof is included, convergent in an upward direction, which ends in a kind of chimney, canalization or conduit, through which the gases produced are evacuated, in such a way that, said cover is traversed on one of its sides by the corresponding electrode connection terminal, the electrode being located vertically centered under said cover, so that on the two sides of said electrode a set of slats will be conveniently spaced apart, parallel to each other and tilted in a convergent way in an upper direction.

When, once the battery with at least one cell with two electrodes is assembled, the electrolysis process is started, the slats will allow the circulation of ions between the electrodes, which will emit gases in the form of bubbles, so that slats shall prevent that the gases mix, and as these bubbles weigh less, they will slide upwards by virtue of the herringbone shape formed by said slats, to be finally extracted through the upper chimney of the corresponding electrode structure. In this way, this special arrangement of the slats makes them act as a "permeable wall" to ions, that is, allowing the passage and flow of ions between electrode and electrode.

At this point it should be noted that, although the embodiment described above for the cover, with an tilted and converging shape in the upward direction, is the most optimal and appropriate in terms of gas evacuation efficiency, manufacturing and material cost, however, it has been envisaged that said cover can have other configurations, such as a cover with a convex dome shape, or a corrugated cover that has a plurality of ridges and valleys in an upward direction, without limiting other configurations.

According to another object of the invention, a structure for electrodes is described, for application in "lead-acid" electrical batteries of the type that comprise a plurality of electrodes formed by vertical laminar plates, between which an electrolyte is established, said plates having anode and cathode functions.

More specifically, the structure comprises a tilted roof that has a chimney, channel or conduit, through which the gases produced during electrolysis are evacuated.

According to a preferred embodiment, the tilted roof has a convergent configuration, in an upward direction. This favors the circulation and exit towards the chimney of the gases produced in electrolysis.

More preferably, the tilted cover is traversed on one of its sides by an electrode connection terminal.

Furthermore, it has been envisaged that the structure additionally comprises a plurality of parallel slats, located on each side of the electrode, said slats being spaced apart and tilted in a convergent way in an upper direction, such that the gas bubbles generated during electrolysis are guided to the chimney.

### DESCRIPTION OF THE DRAWINGS

To complement the description that is being made and in order to help a better understanding of the features of the invention, according to a preferred example of a practical embodiment thereof, a set of drawings is attached as an integral part of said description in which, for illustrative and non-limiting purposes, the following has been represented:
Figure 1.- Shows a perspective view of the structure connected to one of the electrodes for an electric battery performed in accordance with the object of the present invention.
Figure 2.- Shows a front elevation view of the assembly of figure 1 through a vertical longitudinal section made along its central line.
Figure 3.- Shows a profile view of the set of the previous figures through a vertical longitudinal section, perpendicular to that of the previous figure, performed along its central line.
Figure 4.- Shows, finally, a plan view of the set of the previous figures.

### PREFERRED EMBODIMENT OF THE INVENTION

An example of a preferred embodiment is described below, making reference to the figures cited above, without limiting or reducing the scope of protection of the present invention, which is defined in the appended claims.

In view of the figures outlined, it can be seen how the electrode (2) for an electric battery of the invention starts from the conventional structuring of a battery of the so-called "lead-acid" type, in which a series of electrodes ( 2), acting as anode and cathode, distributed in pairs located in a parallel and symmetrically inverted position in the cavity of one or more cells, arranged in turn inside a housing with electrolytic liquid constituting the battery itself, said electrodes being formed (2) by plates with vertical and parallel laminar configuration, between which a fluid or electrolyte is established.

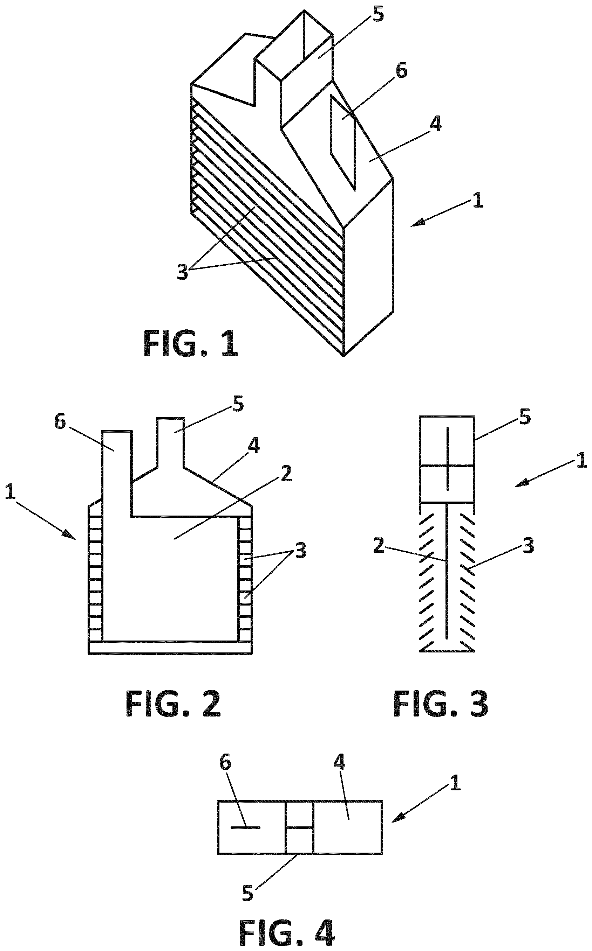

Then, in accordance with the invention, it has been provided that in correspondence with the upper area of each electrode (2) a funnel-like conduit is arranged, which determines a tilted cover (4), convergent in the upward direction, which it is finished off in a kind of chimney (5), channel or conduit, through which the gases produced are evacuated, so that said cover (4) is traversed on one of its sides by the terminal (6) of the corresponding electrode (2), located under said cover (4), centered vertically, so that, as can be seen in figure 3, said cover (4) affects the electrode (2) superiorly, leaving a lateral space to both sides of the electrode (2), in such a way that once the cell is assembled together with a second electrode (2), it will determine a space between both electrodes (2) so that the electrolyte can act as a bridge between them, so that the structure (1) represented in Figure 3 would be repeated laterally and in parallel as many times as deemed appropriate, each unit determining a different anode or cathode, grouped in pairs in the corresponding cells.

In this sense, provision has been made for the two sides of each electrode (2) to be conveniently spaced apart, a set of slats (3) parallel to each other and tilted in a convergent manner in the upper direction. Said slats (3) allow the circulation of ions between the electrodes (2), which will emit gases in the form of bubbles, which will be channeled for each electrode (2) in an upward direction through the slats (3), preventing that the gases mix, being said gases (oxygen in some cases and hydrogen in others), collected through the chimneys (5).

The upper funnel-like cover (4) extends downward on its two sides to cover the set of slats (3) at their ends and give stability to the structure (1) of the device.

In this way, by means of the electronic control of the state of charge or power supply of the battery, and by means of the implementation of three-way solenoid valves at the outlets of the chimneys (5), it will be possible to separate the gases generated during the battery charging and discharging, for later use.

As is evident, for a good operation of the battery described, it is essential that the electrolyte completely covers the slats (3).

## Claims

1. System comprising an electrode (2) for an electric battery of the so-called "lead-acid" type, in which a series of electrodes (2) are involved, materialized in plates of laminar configuration arranged vertically as anode and cathode, distributed in parallel in the cavity of one or more cells of the housing of the battery itself, plates, between which an electrolyte is established, wherein in correspondence with the upper area of the electrode (2) there is a funnel-like conduit, which determines a tilted cover (4), convergent in the upward direction, which ends in a kind of chimney (5) through which the gases produced in the electrolysis are evacuated, cover (4) that is traversed on one of its sides by the corresponding terminal (6) of the electrode (2), with the particularity that on each side of the electrode (2) a set of slats (3) parallel to each other and tilted in a convergent way in the upper direction for guiding the gas bubbles generated in the electrolysis towards the chimney (5);
**characterized in that** the electrode (2) is associated with an electronics for controlling the battery power or charge status, associated with respective three-way solenoid valves implemented in correspondence with the outputs of the chimneys (5) as a means of separating the different gases generated in the battery charging or discharging process;
wherein the sides of the cover (4) extend downwards, covering the set of slats (3) at their ends;
and wherein the electrode (2) is located under the cover (4), centered in a vertical arrangement.

2. Structure (1) for electrodes, for application in "lead-acid" electrical batteries of the type that comprise a plurality of electrodes (2) formed by vertical laminar plates, between which an electrolyte is established, said plates having the functions of anode and cathode, the structure (1) being **characterized in that** it comprises a tilted cover (4) that has a chimney (5), channel or conduit, through which the gases produced during the electrolysis are evacuated;
and wherein the structure (1) additionally comprises a plurality of parallel slats (3), located on each side of the electrode (2), said slats (3) being spaced apart and tilted in a convergent way in the upper direction, such that the gas bubbles generated during electrolysis are guided towards the chimney (5).

3. Structure (1), according to claim 2, **characterized in that** the tilted cover (4) has a convergent configuration, in an upward direction.

4. Structure (1), according to claim 2, **characterized in that** the tilted cover (4) is traversed on one of its sides by a connection terminal (6) for the electrode (2).

## Patentansprüche

1. System, umfassend eine Elektrode (2) für eine elektrische Batterie der sogenannten "Blei-Säure"-Art, bei der eine Reihe von Elektroden (2) involviert ist, materialisiert in Platten von laminarer Konfiguration, vertikal angeordnet als Anode und Kathode, parallel verteilt in dem Hohlraum von einer oder mehreren Zellen des Gehäuses der Batterie selbst, wobei zwischen den Platten ein Elektrolyt eingefügt ist, wobei es entsprechend dem oberen Bereich der Elektrode (2) eine trichterartige Leitung gibt, die eine geneigte Abdeckung (4) bestimmt, die in die Aufwärtsrichtung konvergiert, die in einer Art von Kamin (5) endet, durch den die Gase, die bei der Elektrolyse produziert werden, abgelassen werden, wobei die Abdeckung (4) auf einer ihrer Seiten von dem entsprechenden Abschluss (6) der Elektrode (2) durchlaufen wird, mit der Besonderheit, dass auf jeder Seite der Elektrode (2) ein Satz von Lamellen (3) parallel zueinander und auf eine konvergierende Weise in die Aufwärtsrichtung geneigt ist, um die Gasblasen, die bei der Elektrolyse erzeugt werden, zu dem Kamin (5) zu führen,
**dadurch gekennzeichnet, dass** die Elektrode (2) mit einer Elektronik zum Steuern der Batterieleistung oder des Ladestatus verbunden ist, die mit jeweiligen Dreiwege-Magnetventilen verbunden ist, die entsprechend den Ausgängen der Kamine (5) implementiert sind, um die verschiedenen Gase zu trennen, die bei dem Batterielade- oder -entladeprozess erzeugt werden,
wobei sich die Seiten der Abdeckung (4) nach unten erstrecken und den Satz von Lamellen (3) an ihren Enden abdecken,
und wobei sich die Elektrode (2) unter der Abdeckung (4) befindet, zentriert in einer vertikalen Anordnung.

2. Struktur (1) für Elektroden, zur Anwendung in elektrischen "Blei-Säure"-Batterien der Art, die eine Vielzahl von Elektroden (2) umfasst, die durch vertikale laminare Platten gebildet sind, zwischen denen ein Elektrolyt eingefügt ist, wobei die Platten die Funktionen von Anode und Kathode aufweisen, wobei die Struktur (1) **dadurch gekennzeichnet ist, dass** sie eine geneigte Abdeckung (4) umfasst, die einen Kamin (5), einen Kanal oder eine Leitung aufweist, durch den/die die Gase, die während der Elektrolyse produziert werden, abgelassen werden,
und wobei die Struktur (1) zusätzlich eine Vielzahl von parallelen Lamellen (3) umfasst, die sich auf jeder Seite der Elektrode (2) befinden, wobei die Lamellen (3) beabstandet und auf eine konvergierende Weise in die Aufwärtsrichtung geneigt sind, sodass die Gasblasen, die während der Elektrolyse erzeugt werden, zu dem Kamin (5) hin geführt werden.

3. Struktur (1) nach Anspruch 2, **dadurch gekennzeichnet, dass** die geneigte Abdeckung (4) eine konvergierende Ausgestaltung in einer Aufwärtsrichtung aufweist.

4. Struktur (1) nach Anspruch 2, **dadurch gekennzeichnet, dass** die geneigte Abdeckung (4) auf einer ihrer Seiten von einem Verbindungsanschluss (6) für die Elektrode (2) durchlaufen wird.

## Revendications

1. Système comprenant une électrode (2) pour une batterie électrique de type dit « plomb-acide », dans lequel une série d'électrodes (2) sont impliquées, matérialisées dans des plaques de configuration laminaire agencées verticalement comme anode et cathode, réparties en parallèle dans la cavité d'une ou plusieurs cellules du boîtier de la batterie elle-même, des plaques, entre lesquelles un électrolyte est établi, dans lequel, en correspondance avec la zone supérieure de l'électrode (2) se trouve un conduit en forme d'entonnoir, qui détermine un couvercle (4) incliné, convergent dans la direction vers le haut, qui se termine dans une sorte de cheminée (5) à travers laquelle les gaz produits dans l'électrolyse sont évacués, couvercle (4) qui est traversé sur l'un de ses côtés par la borne (6) correspondante de l'électrode (2), avec la particularité que, de chaque côté de l'électrode (2), se trouve un ensemble de lames (3) parallèles les unes aux autres et inclinées de manière convergente dans la direction supérieure pour guider les bulles de gaz générées dans l'électrolyse vers la cheminée (5) ;
**caractérisé en ce que** l'électrode (2) est associée à une électronique pour commander la puissance ou l'état de charge de la batterie, associée à des électrovannes à trois voies respectives mises en place en correspondance avec les sorties des cheminées (5) comme moyen de séparation des différents gaz générés dans le processus de charge ou de décharge de la batterie ;
dans lequel les côtés du couvercle (4) s'étendent vers le bas, recouvrant l'ensemble de lames (3) à leurs extrémités ;
et dans lequel l'électrode (2) est située sous le couvercle (4), centrée dans un agencement vertical.

2. Structure (1) pour électrodes, pour application dans des batteries électriques « plomb-acide » du type comprenant une pluralité d'électrodes (2) formées par des plaques laminaires verticales, entre lesquelles un électrolyte est établi, lesdites plaques ayant les fonctions d'anode et de cathode, la structure (1) étant **caractérisée en ce qu'**elle comprend un couvercle (4) incliné qui présente une cheminée (5), un canal ou un conduit, à travers laquelle ou lequel les gaz produits lors de l'électrolyse sont évacués ;
et dans laquelle la structure (1) comprend en outre une pluralité de lames (3) parallèles situées de chaque côté de l'électrode (2), lesdites lames (3) étant espacées et inclinées de manière convergente dans la direction supérieure, de sorte que les bulles de gaz générées pendant l'électrolyse soient guidées vers la cheminée (5).

3. Structure (1), selon la revendication 2, **caractérisée en ce que** le couvercle (4) incliné présente une configuration convergente, dans une direction vers le haut.

4. Structure (1) selon la revendication 2, **caractérisée en ce que** le couvercle (4) incliné est traversé sur l'un de ses côtés par une borne (6) de connexion pour l'électrode (2).
